# FASCICULE DE BREVET EUROPEEN

(11) **EP 1 212 637 B1**
(45) Date de publication et mention de la délivrance du brevet: **09.11.2005**
(21) Numéro de dépôt: 00962595.5
(22) Date de dépôt: 11.09.2000
(51) Int. Cl.: G01V 3/15, G08B 6/00

(54) **DISPOSITIF D'AVERTISSEMENT DE LA PRESENCE D'OBJETS DANGEREUX**
VORRICHTUNG ZUR WARNUNG VOR GEFÄHRLICHEN GEGENSTÄNDEN
DEVICE WARNING AGAINST THE PRESENCE OF DANGEROUS OBJECTS

(30) Priorité: 14.09.1999 FR 9911496
(43) Date de publication de la demande: 12.06.2002
(73) Titulaire: Cayrol, Christophe, 30400 Villeneuve-lès-Avignon (FR)
(72) Inventeur: Cayrol, Christophe, 30400 Villeneuve-lès-Avignon (FR)
(74) Mandataire: Flavenot, Bernard
(86) Numéro de dépôt international: PCT/FR2000/002495
(87) Numéro de publication internationale: WO 2001/020368

(56) Documents cités:
- DE-A- 3 027 189
- FR-A- 2 762 487
- GB-A- 2 123 559
- US-A- 4 068 164
- US-A- 5 867 105

## Description

La présente invention concerne les dispositifs permettant d'avertir une personne se déplaçant sur un chemin donné, de la présence, sur ce chemin, d'objets présentant éventuellement un danger pour elle, et plus particulièrement mais non exclusivement les dispositifs de protection individuelle contre des objets comme des mines explosives ou analogues.

Il est déjà connu des dispositifs qui permettent de détecter et de localiser des objets qui sont cachés à la vue des êtres humains par différents matériaux, par exemple en étant enfouis dans la terre, le sable, etc.

Parmi ces dispositifs connus, certains fonctionnent par la détection des matériaux métalliques entrant dans la constitution de ces objets, en utilisant par exemple le pouvoir de ces matériaux à réfléchir certaines ondes électromagnétiques. Pour cela, ces dispositifs comportent essentiellement deux antennes, une antenne émettrice destinée à émettre des ondes électromagnétiques et une antenne réceptrice apte à capter les ondes réfléchies sur les parties réfléchissantes des objets enfouis. L'analyse du signal délivré à la sortie de l'antenne réceptrice permet de déterminer s'il y a, ou non, présence, par exemple d'une mine susceptible d'être dangereuse.

Bien entendu, il existe d'autres types de détecteurs d'objets enfouis dans le sol ou tout autre matériau, dont le fonctionnement est basé sur des propriétés physiques de ces objets autres que la réflexion d'ondes électromagnétiques. C'est ainsi qu'il existe des détecteurs basés sur la réception de rayonnements magnétiques, d'ondes lumineuses visibles ou non, d'ondes sonores, des réactions chimiques, etc.

Tous ces dispositifs de détection d'objets sont bien connus en eux-mêmes et ne seront pas plus amplement décrits ici, d'autant plus qu'ils sont parfaitement disponibles dans le commerce et que tout un chacun peut facilement s'en procurer.

Il est aussi rappelé qu'il est connu des dispositifs qui permettent à des personnes spécialisées, comme des démineurs ou analogues, de détecter, sur un chemin donné, la présence d'objets éventuellement dangereux, par exemple des mines explosives, qui pourraient empêcher toute personne de progresser sur ce chemin en toute sécurité.

Ces dispositifs comportent schématiquement un détecteur d'objets disposé à une extrémité d'un manche, l'autre extrémité du manche comportant des moyens permettant au démineur de le tenir et de déplacer le détecteur d'objets devant lui pour rechercher et localiser ces objets. Il est donc bien évident que ces dispositifs ne permettent pas aux personnes qui les utilisent d'avoir d'autres fonctions que la localisation de mines ou analogues.

Notamment, ils ne peuvent raisonnablement pas être utilisés par des personnes qui sont amenées à progresser sur un chemin donné dont le sol est susceptible de contenir des mines ou analogues, mais qui ont d'autres fonctions que celle du déminage, par exemple en tant que combattants ou analogues. En effet, dans ce cas, il ne leur est pas possible de porter et tenir, à la fois, un dispositif de détection d'objets comme décrit ci-dessus et leur équipement de combat habituel, armes ou analogues.

Il est vrai que les combattants sont généralement amenés à progresser sur des chemins qui ont été préalablement déminés par les services spécialisés. Mais il y a toujours le risque que des mines n'aient pas été détectées et, surtout, nombre d'opérations doivent pouvoir être menées le plus rapidement possible, avant qu'il n'ait été possible de déminer le chemin devant être emprunté par ces combattants ou analogues.

Il a donc été mis au point des dispositifs permettant d'avertir ces personnes quand un objet suspect est détecté, pour leur éviter de progresser plus avant. De tels dispositifs sont par exemple décrits dans le GB-A-2 123 559 et le DE-A-30 27 189. Ces dispositifs comportent essentiellement une alarme constituée par exemple par un vibreur qui est appliqué sur la peau de la personne. Avec un tel dispositif, la personne doit tout d'abord percevoir le signal délivré par l'alarme, puis l'analyser, et enfin élaborer un ordre mental pour commander un mouvement d'arrêt et de retrait, par exemple d'une jambe. Le temps mis pour élaborer ces quatre opérations qui correspondent à une stimulation réflexe est d'environ cent millisecondes.

La présente invention a pour but de réaliser un dispositif permettant d'avertir une personne se déplaçant sur un chemin donné, de la présence, sur ce chemin, d'un objet présentant éventuellement un danger pour elle, qui notamment la libère des contraintes dues à l'utilisation manuelle des dispositifs de détection d'objets de l'art antérieur, tout en lui assurant une bonne sécurité personnelle lors de sa progression sur ce chemin, et surtout d'arrêter sa progression sur ce chemin beaucoup plus rapidement qu'avec les dispositifs de l'art antérieur tels que ceux rappelés ci-dessus.

Plus précisément, la présente invention a pour objet un dispositif permettant d'avertir une personne se déplaçant sur un chemin donné, de la présence, sur ce chemin, d'objets présentant éventuellement un danger pour elle, comportant :
des moyens de détection desdits objets, ces moyens de détection étant aptes à délivrer en sortie un signal de détection, le changement d'état de ce signal étant indicatif de la présence d'un dit objet dans une zone prédéterminée dudit chemin, et
des moyens pour lier lesdits moyens de détection à une première partie du corps de ladite personne, et
qu'il comporte en outre des moyens pour convertir ledit signal de détection en un signal de stimulation électrique fonctionnelle d'une seconde partie du corps de ladite personne.

D'autres caractéristiques et avantages de l'invention apparaîtront au cours de la description suivante donnée en regard des dessins annexés à titre illustratif mais nullement limitatif, dans lesquels :
La figure 1 représente le schéma de principe du dispositif selon l'invention permettant d'avertir une personne se déplaçant sur un chemin donné, de la présence, sur ce chemin, d'objets présentant éventuellement un danger pour cette personne, et
Les figures 2 et 3 représentent, sous la forme de blocs diagrammes, le schéma de principe de deux modes de réalisation d'un perfectionnement au dispositif selon la figure 1.

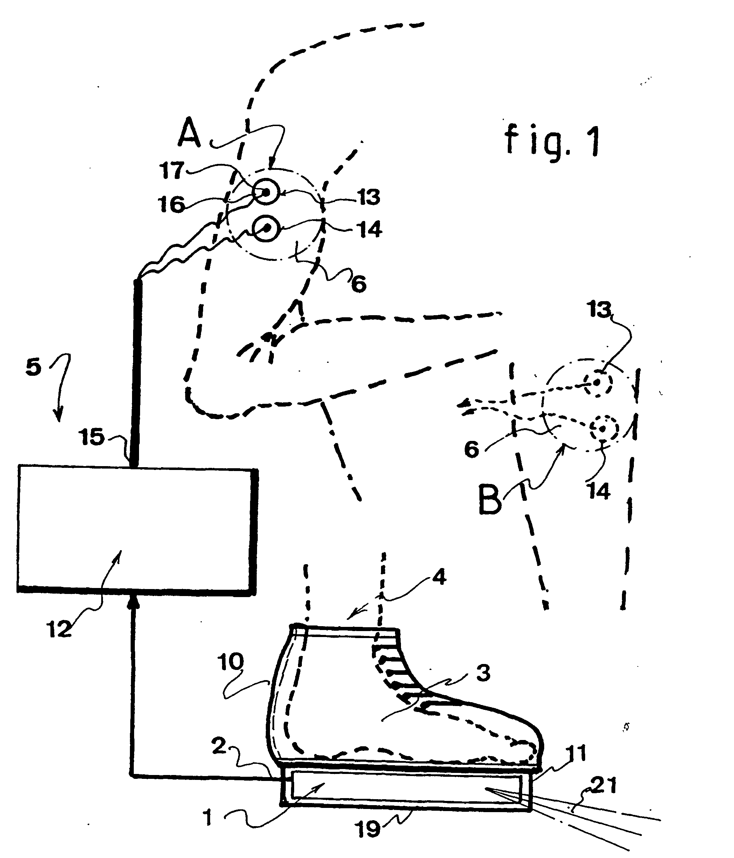

La figure 1 représente le schéma de principe d'un dispositif selon l'invention permettant d'avertir une personne se déplaçant sur un chemin donné, de la présence, sur ce chemin, d'objets présentant éventuellement un danger pour elle, en précisant que ce dispositif peut être utilisé quelle que soit la nature de ces objets, bien qu'il trouve une application particulièrement avantageuse comme système de protection individuelle contre des mines anti-personnelles ou analogues. Il est en outre précisé que, par "chemin", il faut entendre toute zone, quelle qu'elle soit, sur laquelle peut progresser une personne, sans limitation de la nature de cette zone, ni limitation de lieu et de temps.

Ce dispositif comporte des moyens de détection d'objets 1 aptes à délivrer en sortie 2 un signal de détection, le changement d'état de ce signal de détection étant indicatif de la présence, dans une zone prédéterminée du chemin, d'un des objets aptes à être détectés. Il est bien précisé que, par « changement d'état », on entend toute variation détectable d'un signal, par exemple changement de signe, changement de fréquence, dépassement d'un seuil déterminé, etc.

Les moyens de détection d'objets 1 comportent au moins un détecteur d'objets 19, du type rappelé au préambule de la présente description, dont le fonctionnement est basé par exemple sur l'un des phénomènes physiques suivants : réception d'ondes électromagnétiques réfléchies sur des matériaux donnés, de rayonnements magnétiques, d'ondes lumineuses visibles ou non, d'ondes sonores.

Le dispositif comporte aussi des moyens 3 pour lier ces moyens de détection d'objets 1 à une première partie 4 du corps de la personne, et des moyens 5 pour convertir le signal de détection en un signal de stimulation électrique fonctionnelle d'une seconde partie 6 du corps de cette même personne.

A titre d'exemple avantageux, les moyens 3 pour lier les moyens de détection d'objets à une première partie 4 du corps de la personne sont constitués par une chaussure 10, la première partie 4 du corps étant dans ce cas, le pied de la personne apte à être glissé dans cette chaussure, le détecteur d'objets 19 étant solidaire de la chaussure 10 en étant par exemple noyé ou enfermé, comme illustré sur la figure 1, dans sa semelle 11.

Il est aussi précisé que les moyens 3 pour lier les moyens de détection d'objets 1 à une première partie du corps de ladite personne peuvent aussi être constitués par au moins un bracelet apte à être porté autour d'un membre de la personne, le détecteur d'objets 19 étant alors solidaire du bracelet. A titre d'exemple, le bracelet peut être placé autour d'une cheville de l'utilisateur du dispositif selon l'invention, ou bien autour de l'un de ses poignets quand il doit avancer par exemple à quatre pattes ou en rampant.

Quant aux moyens 5 pour convertir le signal de détection obtenu en sortie 2 des moyens de détection d'objets 1 en un signal de stimulation électrique fonctionnelle d'une seconde partie 6 du corps de cette même personne, ils peuvent être constitués de différentes façons.

De préférence, ce signal de stimulation électrique fonctionnelle sera un signal de stimulation appliqué au niveau de points nerveux musculaires et des muscles à contracter, par exemple entre un point nerveux du corps de la personne lié à un ou plusieurs muscles et un point moteur de ces muscles, comme décrit ci-après.

Les moyens 5 peuvent alors être avantageusement constitués par un convertisseur 12 du signal de détection en un signal électrique d'une intensité donnée, et deux électrodes 13, 14 reliées à la sortie 15 du convertisseur 12, ces deux électrodes étant conformées pour être appliquées sur la seconde partie 6 du corps de la personne qui doit recevoir le signal de stimulation électrique fonctionnelle.

Ces deux électrodes sont situées sur la peau, de façon qu'elles soient de préférence à proximité respectivement du tronc nerveux lié à un muscle et d'un point moteur de ce muscle.

Ces électrodes sont par exemple du type de celles qui sont utilisées par les médecins pour effectuer des électrocardiogrammes ou analogues, constituées de pastilles autocollantes 16 aptes à adhérer sur la peau du corps humain, avec sensiblement en leur centre un point de conduction électrique 17 qui peut être au contact intime de la peau quand la pastille est appliquée à l'endroit du corps qui doit recevoir une impulsion électrique. Ces électrodes sont ainsi par exemple constituées de pastilles auto-adhésives formées à partir d'un film isolant et d'un film conducteur apte à venir au contact de la peau.

Dans cette réalisation avantageuse mentionnée ci-dessus, le convertisseur 12 est conformé pour délivrer à sa sortie 15 des impulsions électriques avantageusement d'une durée inférieure à environ 0,75 ms, modulées à une fréquence comprise entre 1 et 100 Hz et d'une intensité comprise entre environ 0,5 et 100mA.

A titre d'exemple illustratif et explicatif, les deux électrodes 13, 14 ont été représentées, sur la figure 1, disposées en deux endroits possibles du corps humain. Sur la partie A de la figure 1, ces électrodes 13, 14 sont placées en coopération avec le biceps d'un bras de la façon décrite ci-dessus. Sur la partie B de cette figure 1, elles sont placées sur la montée de la jambe, c'est-à-dire en coopération avec le muscle qui est connu sous le terme de «jambier antérieur », une première électrode étant dans ce cas disposée à proximité de la tête du péroné, c'est-à-dire à proximité du tronc nerveux du nerf sciatique, et l'autre électrode étant disposée à proximité du creux poplité, c'est-à-dire du côté intérieur de la jambe.

Le dispositif décrit ci-dessus fonctionne et s'utilise de la façon suivante :

Quand une personne ayant des responsabilités comme mentionné auparavant doit se déplacer sur un chemin susceptible de comporter des objets pouvant être dangereux pour elle, elle est équipée d'une chaussure 10 avec un détecteur d'objets 19, les deux électrodes 13, 14 étant par exemple appliquées sur une jambe comme mentionné ci-dessus et illustré schématiquement sur la partie B de la figure 1, avantageusement sur la jambe dont le pied est chaussé de la chaussure 10.

Lorsque la personne lève le pied portant la chaussure 10 et l'avance pour effectuer un pas, le cône de détection d'objets 21 du détecteur d'objets 19 balaie la partie du chemin sur laquelle la personne devrait reposer son pied.

Si le détecteur 19 détecte un objet enfoui dans cette partie de chemin, avant que la personne ait reposé son pied sur le sol, les moyens de détection d'objets 1 délivrent à leur sortie 2 un signal de détection qui est traité par le convertisseur 12 en un signal de stimulation électrique fonctionnelle qui est appliqué via les électrodes 13, 14 à un muscle de la jambe. Cette stimulation musculaire se traduit par un recul automatique du pied de l'utilisateur avec un temps de réponse qui a été mesuré entre vingt et quarante millisecondes, soit un gain de temps par rapport au temps de réponse avec les dispositifs de l'art antérieur supérieur à cinquante pour cent, ce qui est considérable dans le cas de l'application à la détection des mines explosives.

Le mode de réalisation du dispositif décrit ci-dessus en regard de la figure 1 donne de bons résultats. Cependant, du fait qu'un seul des deux pieds de la personne soit équipé de moyens de détection d'objets 1, il peut présenter une zone de détection insuffisante. Il ne pourra donner totale satisfaction que s'il permet de balayer, à chaque pas, la partie de chemin correspondant à deux pas. Pour obtenir une telle détection, il faut utiliser des détecteurs d'objets ayant des cônes de détection d'angle au sommet relativement important. Mais cette condition va à l'encontre de la sensibilité des détecteurs car il est bien connu que, pour que la détection soit la meilleure possible, il faut que le cône de détection ait un angle au sommet le plus faible possible.

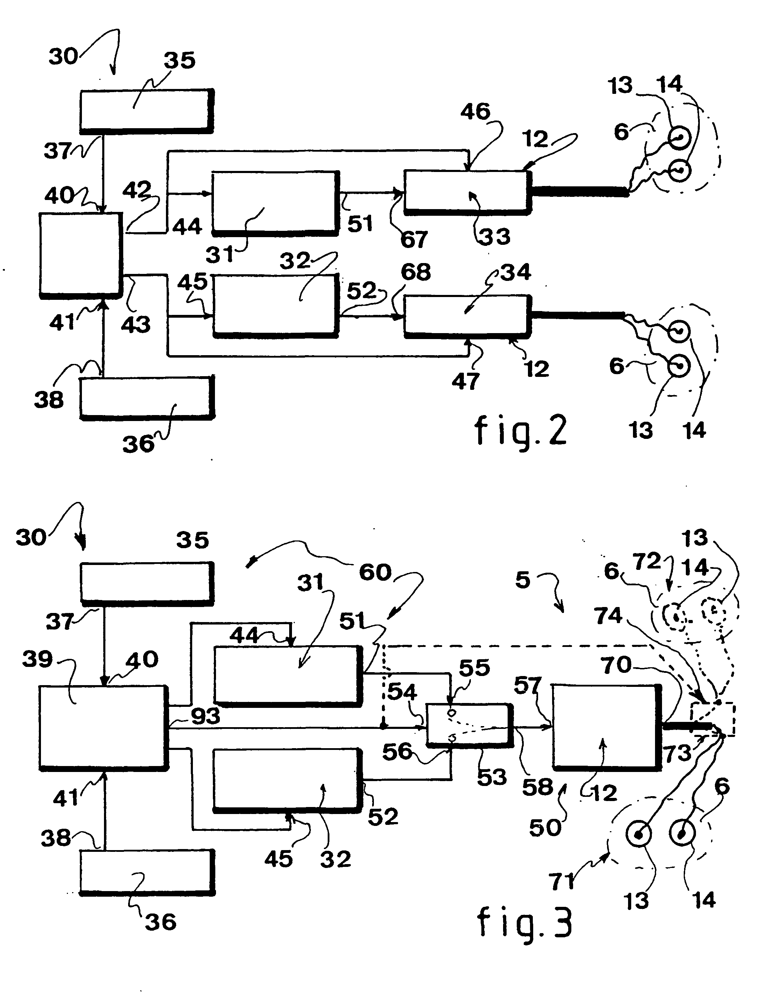

Aussi, pour accroître la fiabilité du dispositif et ainsi augmenter la sécurité de la personne, le dispositif selon l'invention peut avantageusement présenter l'une des deux configurations qui sont respectivement schématiquement représentées sur les figures 2 et 3.

Dans le mode de réalisation selon la figure 2, les moyens de détection d'objets 1 comportent deux détecteurs d'objets 31, 32 de même type que le détecteur d'objets 19 dans le mode de réalisation en regard de la figure 1. En accord avec l'exemple préférentiel donné ci-avant, les moyens 3 pour lier les moyens de détection d'objets 1 à une première partie du corps de la personne sont constitués par deux chaussures aptes à être portées par cette personne, les deux détecteurs d'objets 31, 32 étant respectivement solidaires de ces deux chaussures, par exemple en étant noyés ou enveloppés dans les semelles.

Dans le mode de réalisation selon la figure 2, les moyens 5 pour convertir le signal de détection en un signal de stimulation électrique fonctionnelle d'une seconde partie 6 du corps de la personne, comportent deux lignes de stimulation électrique fonctionnelle 33, 34 constituées chacune d'au moins un convertisseur de signaux 12 et de moyens pour appliquer les signaux délivrés à la sortie du convertisseur à la seconde partie 6 du corps de la personne, l'entrée de chaque convertisseur constituant l'entrée de chaque ligne de stimulation électrique fonctionnelle, les entrées 67, 68 des deux lignes de stimulation électrique fonctionnelle 33, 34 étant respectivement connectées aux sorties 51, 52 des deux détecteurs d'objets 31, 32. Les moyens pour appliquer les signaux délivrés à la sortie de chaque convertisseur à la seconde partie 6 du corps de la personne sont constitués, par exemple, par deux électrodes 13, 14 comme mentionné auparavant, chaque paire d'électrodes étant par exemple appliquée sur la jambe correspondant au pied qui porte la chaussure comportant le détecteur qui lui est associé.

De façon avantageuse, dans le but d'obtenir un fonctionnement cohérent du dispositif, notamment en évitant une interférence entre les détecteurs, le dispositif comporte en outre des moyens 30 pour détecter le mouvement de chaque pied de la personne par rapport au sol et des moyens pour commander les deux détecteurs d'objets 31, 32 en fonction du mouvement des pieds.

Ces moyens 30 sont constitués par exemple par des capteurs 35, 36 aptes à délivrer à leur sortie respective 37, 38 des signaux représentatifs de l'état de mouvement de chaque pied par rapport au sol.

Ces capteurs 35, 36 peuvent être constitués de différentes façons. A titre d'exemple, ils peuvent être constitués par des jauges de contrainte montées en coopération avec chaque chaussure, et agencés pour délivrer à leur sortie un signal dès que la chaussure quitte le sol, le fonctionnement de ces jauges étant par exemple basé sur la pression exercée sur la semelle de la chaussure quand la personne est debout et que son pied repose sur le sol. La réalisation de ces jauges de contrainte et leur intégration dans une chaussure ne posant pas de difficulté pour un homme du métier, elles ne seront pas plus amplement décrites ici.

Ces moyens 30 pour détecter le mouvement des deux pieds par rapport au sol comportent en outre un organe de commande 39 recevant sur deux entrées 40, 41 les signaux délivrés respectivement aux sorties 37, 38 des capteurs de mouvement 35, 36. Cet organe de commande est agencé pour délivrer sur deux sorties 42, 43 des signaux représentatifs de l'état de mouvement des deux pieds, ces deux sorties 42, 43 étant respectivement connectées aux entrées de commande 44, 45 respectivement des deux détecteurs d'objets 31, 32 et éventuellement, si nécessaire, aux entrées de commande 46, 47 respectivement des deux lignes de stimulation électrique fonctionnelle 33, 34. Dans le mode illustré, ces entrées de commande sont les entrées de commande des deux convertisseurs 12. L'organe de commande 39 est agencé pour étudier les signaux délivrés à la sortie de chaque capteur de mouvement 35, 36 et délivrer des signaux de commande sur ses deux sorties 42, 43 reliées respectivement aux entrées de commande 44, 45 des deux détecteurs d'objets 31, 32, de façon que, pendant la marche de la personne sur le chemin, lesdits signaux de commande interrompent le fonctionnement du détecteur d'objets 31, 32 qui est associé à la chaussure qui repose sur le chemin et maintiennent en fonctionnement le détecteur d'objet qui est associé à la chaussure qui est soulevée.

Ce dispositif a été décrit avec deux détecteurs respectivement associés aux deux pieds de la personne au moyen de ses chaussures, mais il est possible de mettre en oeuvre un autre mode de réalisation du dispositif, dans lequel les deux détecteurs sont respectivement associés à deux membres de cette personne au moyen de deux bracelets.

Le dispositif illustré sur la figure 2 fonctionne de la façon suivante :

Il fonctionne dans son ensemble comme le dispositif illustré sur la figure 1 mais, du fait qu'il comporte deux détecteurs d'objets 31, 32 associés respectivement aux deux pieds de la personne, ses performances sont supérieures à celles du dispositif selon la figure 1. En effet, le dispositif selon la figure 2 est apte à détecter la présence d'un objet chaque fois que la personne avance un pied devant l'autre, quel que soit ce pied. Il permet donc d'utiliser des détecteurs d'objets ayant des cônes de détection d'angle au sommet beaucoup petit et donc plus sensibles.

De plus, lorsque la personne avance pas à pas sur le chemin, les deux capteurs de mouvement 35, 36 associés respectivement à ses deux pieds délivrent à leur sortie des signaux qui commandent, via l'organe de commande 39, l'interruption alternative du fonctionnement des détecteurs d'objets. Ainsi, les détecteurs d'objets fonctionnent alternativement au fur et à mesure que la personne avance pas à pas. Chaque détecteur d'objet ne fonctionne que lorsque le pied est en mouvement.

Le mode de réalisation illustré sur la figure 3 est identique dans son principe à celui qui est illustré sur la figure 2.

Cependant, dans ce mode de réalisation, les moyens 5 pour convertir le signal de détection en un signal de stimulation électrique fonctionnelle d'une seconde partie du corps de la personne comportent une seule ligne de stimulation électrique fonctionnelle 50 d'une structure identique à celle des lignes 33, 34 décrites ci-dessus, mais comportent en plus un commutateur inverseur 53 interposé entre l'entrée 57 de la ligne de stimulation électrique fonctionnelle 50 et les sorties 51, 52 respectivement des deux détecteurs d'objets 31, 32.

Ce commutateur inverseur 53 comporte deux entrées d'alimentation 55, 56, une sortie 58 et une entrée de commande d'inversion de commutation 54. Ses deux entrées d'alimentation 55, 56 sont respectivement reliées aux sorties respectives 51, 52 des détecteurs d'objets 31, 32, sa sortie 58 est reliée à l'entrée 57 de la ligne de stimulation électrique fonctionnelle 50.

Ces moyens 5 comportent en outre des moyens 60 pour commander le basculement du commutateur inverseur 53, comme explicité ci-après.

Ces moyens 60 pour commander le basculement du commutateur inverseur 53 utilisent avantageusement, comme dans le mode de réalisation illustré sur la figure 3, les deux capteurs de mouvement 35, 36 et l'organe de commande 39. Dans ce cas, l'entrée de commande 54 du commutateur inverseur 53 est reliée à une troisième sortie 93 de l'organe de commande 39.

La ligne de stimulation électrique fonctionnelle 50 ne comporte donc que deux électrodes 13, 14 positionnées en un seul endroit d'une seconde partie 6 du corps de la personne, par exemple sur un bras comme illustré en partie A de la figure 1, cette ligne de stimulation électrique fonctionnelle 50 étant connectée au détecteur d'objets 31, 32 qui fonctionne, c'est-à-dire au détecteur associé à la chaussure qui ne repose pas sur le sol. Dans le cas où la personne avance en marchant pas à pas, la ligne de stimulation électrique fonctionnelle est alternativement connectée à l'un et à l'autre des deux détecteurs.

Cependant, dans une mise en oeuvre préférentielle de l'invention, la sortie 70 du convertisseur 12 est reliée à deux groupes 71, 72 de deux électrodes 13, 14 au moyen d'un second inverseur 73 dont l'entrée de commande 74 est reliée à la sortie 93 de l'organe de commande 39. Cette réalisation est plus particulièrement représentée en traits interrompus sur la figure 3. De cette façon, chaque groupe de deux électrodes est associé à une jambe de l'utilisateur du dispositif selon l'invention et, seuls, sont stimulés les muscles de la jambe dont le détecteur d'objet est actionné et détecte un objet. Cette réalisation est avantageuse car, lorsque les muscles d'une jambe sont stimulés, l'autre jambe ne reçoit aucune stimulation, ce qui permet à la personne de stopper librement sa progression.

Le fonctionnement du mode de réalisation du dispositif comportant deux détecteurs associés respectivement à deux bracelets respectivement placés autour de deux membres d'une personne se déduit sans aucune difficulté de celui décrit ci-dessus et ne sera donc pas spécifiquement décrit ici.

Ce dernier mode de réalisation selon la figure 3 présente l'avantage d'être plus léger que celui selon la figure 2.

Bien entendu, le dispositif selon l'invention comporte en outre des moyens d'alimentation en énergie autonomes et d'autres éléments périphériques qui sont généralement associés à ce genre de dispositif, par exemple des afficheurs, des boîtiers étanches, etc. Ces éléments sont bien connus des hommes du métier et ne seront donc pas explicitement décrits ici.

La description qui vient d'être faite du dispositif selon l'invention pour la détection d'objets enfouis dans un sol ou analogue, et celle de son fonctionnement, mettent à elles seules en évidence les avantages de ce dispositif par rapport à ceux de l'art antérieur. Ces avantages ne seront donc pas plus amplement développés ici.

## Revendications

1. Dispositif permettant d'avertir une personne se déplaçant sur un chemin donné, de la présence, sur ce chemin, d'objets présentant éventuellement un danger pour elle, comportant:
des moyens de détection desdits objets (1), ces moyens de détection étant aptes à délivrer en sortie (2) un signal de détection, le changement d'état de ce signal étant indicatif de la présence d'un dit objet dans une zone prédéterminée dudit chemin, et
des moyens (3) pour lier les moyens de détection d'objets à une première partie du corps de ladite personne,
**caractérisé par le fait qu'**il comporte en outre des moyens (5) pour convertir ledit signal de détection en un signal de stimulation électrique fonctionnelle d'une seconde partie du corps de ladite personne.

2. Dispositif selon la revendication 1, **caractérisé par le fait que** lesdits moyens de détection d'objets (1) comportent au moins un détecteur d'objets (19), le fonctionnement dudit détecteur d'objets étant basé sur au moins l'un des phénomènes physiques suivants : réception d'ondes électromagnétiques réfléchies sur des matériaux donnés, de rayonnements magnétiques, d'ondes lumineuses visibles ou non, d'ondes sonores, réactions chimiques.

3. Dispositif selon la revendication 2, **caractérisé par le fait que** les moyens (3) pour lier les moyens de détection d'objets (1) à une première partie du corps de ladite personne sont constitués par une chaussure (10) apte à être chaussée par ladite personne, le détecteur d'objets (19) étant solidaire de la chaussure (10).

4. Dispositif selon la revendication 3, **caractérisé par le fait que** le détecteur d'objets (19) est solidaire de la chaussure en étant noyé dans la semelle (11) de ladite chaussure (10).

5. Dispositif selon la revendication 2, **caractérisé par le fait que** les moyens (3) pour lier les moyens de détection d'objets (1) à une première partie du corps de ladite personne sont constitués par au moins un bracelet apte à être porté autour d'un membre de ladite personne, le détecteur d'objets (19) étant solidaire dudit bracelet.

6. Dispositif selon l'une des revendications 1 à 5, **caractérisé par le fait que** les moyens (5) pour convertir le signal de détection en un signal de stimulation électrique fonctionnelle d'une seconde partie du corps de ladite personne sont constitués par un convertisseur (12) du signal de détection obtenu en sortie (2) des moyens de détection (1) en un signal électrique d'une valeur donnée, et deux électrodes (13, 14) qui sont reliées à la sortie (15) du convertisseur (12), ces deux électrodes (13, 14) étant conformées pour être appliquées sur ladite seconde partie (6) du corps de la personne.

7. Dispositif selon la revendication 6, **caractérisé par le fait qu'**au moins l'une des deux électrodes est constituée d'une pastille autocollante (16) et d'un point de conduction électrique (17) situé sensiblement au centre de ladite pastille, ledit point de conduction électrique étant apte à venir au contact de la peau du corps quand la pastille est collée sur la peau.

8. Dispositif selon l'une des revendications 6 et 7, **caractérisé par le fait que** le convertisseur (12) est agencé pour délivrer à sa sortie (15) des impulsions électriques d'une durée inférieure à environ 0,75 ms, modulées à une fréquence comprise entre 1 et 100 Hz, et d'une intensité comprise entre environ 0,5 et 100 mA.

9. Dispositif selon la revendication 1, **caractérisé par le fait que** les moyens de détection d'objets (1) comportent au moins deux détecteurs d'objets (31, 32), le fonctionnement desdits détecteurs d'objets étant basé sur au moins l'un des phénomènes physiques suivants: réception d'ondes électromagnétiques réfléchies sur des matériaux donnés, de rayonnements magnétiques, d'ondes lumineuses visibles ou non, d'ondes sonores.

10. Dispositif selon la revendication 9, **caractérisé par le fait que** lesdits moyens (3) pour lier les moyens de détection d'objets (1) à une première partie (4) du corps de ladite personne comportent deux chaussures (10) aptes à être respectivement portées aux deux pieds de ladite personne, lesdits deux détecteurs d'objets (31, 32) étant respectivement solidaires des deux dites chaussures (10).

11. Dispositif selon la revendication 10, **caractérisé par le fait que** les deux dits détecteurs d'objets (31, 32) sont respectivement solidaires des deux chaussures (10) en étant noyés dans leur semelle (11).

12. Dispositif selon l'une des revendications 10 et 11, **caractérisé par le fait qu'**il comporte en outre des moyens (30) pour détecter le mouvement des deux pieds de la dite personne par rapport au sol et des moyens pour commander les deux dits détecteurs d'objets (31, 32) en fonction du mouvement des pieds,
les deux détecteurs d'objets (31, 32) en fonction du mouvement des pieds sont constitués par deux capteurs de mouvement (35, 36) montés en coopération respectivement avec les deux chaussures, chaque capteur étant apte à délivrer à sa sortie (37, 38) des signaux représentatifs du mouvement du pied portant la chaussure avec laquelle il est en coopération, et un organe de commande (39) reliant les sorties (37, 38) des deux capteurs (35, 36) respectivement à une entrée de commande (44, 45) des deux détecteurs d'objets (31, 32).

13. Dispositif selon la revendication 12, **caractérisé par le fait que** ledit organe de commande (39) est agencé pour étudier les signaux délivrés à la sortie de chaque capteur de mouvement (35, 36) et délivrer des signaux de commande sur ses deux sorties (42, 43) reliées respectivement aux entrées de commande (44, 45) des deux détecteurs d'objets (31, 32), de façon que, pendant la marche de la personne sur le chemin, lesdits signaux de commande interrompent le fonctionnement du détecteur d'objets (31, 32) qui est associé à la chaussure qui repose sur le chemin et maintiennent en fonctionnement le détecteur d'objet qui est associé à la chaussure qui est soulevée.

14. Dispositif selon l'une des revendications 9 à 13, **caractérisé par le fait que** les moyens (5) pour convertir le signal de détection en un signal de stimulation électrique fonctionnelle d'une seconde partie du corps de ladite personne comportent : une ligne de stimulation électrique fonctionnelle (50) constituée d'au moins un convertisseur de signaux (12) et de moyens pour appliquer les signaux délivrés à la sortie du convertisseur à la seconde partie (6) du corps de la personne, l'entrée (57) du convertisseur constituant l'entrée de la ligne de stimulation électrique fonctionnelle, un commutateur inverseur (53) commandable par une entrée de commande (54), les entrées d'alimentation (55, 56) dudit commutateur inverseur étant respectivement reliées aux sorties (51, 52) des deux détecteurs d'objets (31, 32), la sortie (58) de cedit commutateur étant reliée à l'entrée (57) de ladite ligne de stimulation électrique fonctionnelle (50), et des moyens (60) pour commander ledit commutateur inverseur (53) par son entrée de commande (54).

15. Dispositif selon les revendications 13 et 14, **caractérisé par le fait que** les moyens (60) pour commander ledit commutateur inverseur (53) par son entrée de commande (54) sont constitués par les deux capteurs de mouvement (35, 36) et par l'organe de commande (39) dont l'une (93) des sorties de commande est reliée à l'entrée de commande (54) du commutateur inverseur (53).

16. Dispositif selon l'une des revendications 9 à 13, **caractérisé par le fait que** les moyens (5) pour convertir le signal de détection en un signal de stimulation électrique fonctionnelle d'une seconde partie du corps de ladite personne comportent deux lignes de stimulation électrique fonctionnelle (33, 34) constituées chacune d'au moins un convertisseur de signaux (12) et de moyens pour appliquer les signaux délivrés à la sortie du convertisseur à la seconde partie (6) du corps de la personne, l'entrée (67, 68) du convertisseur constituant l'entrée de la ligne de stimulation électrique fonctionnelle, les entrées des deux lignes de stimulation électrique fonctionnelle respectivement connectées aux sorties (51, 52) des deux détecteurs d'objets (31, 32).

## Patentansprüche

1. Vorrichtung, die ermöglicht, eine auf einem gegebenen Weg sich bewegende Person vor dem Vorhandensein von Objekten auf diesem Weg, die eventuell eine Gefahr für sie darstellen, zu warnen, mit:
Mitteln zum Erfassen dieser Objekte (1), wobei diese Erfassungsmittel am Ausgang (2) ein Erfassungssignal liefern können, wobei die Änderung des Zustandes dieses Signals auf das Vorhandensein eines solchen Objekts in einer vorgegebenen Zone dieses Weges hinweist, und
Mitteln (3), die die Mittel für die Erfassung von Objekten mit einem ersten Teil des Körpers der Person verbinden,
**dadurch gekennzeichnet, dass** sie außerdem Mittel (5) umfasst, die das Erfassungssignal in ein elektrisches Stimulationssignal umsetzen, das auf einen zweiten Teil des Körpers dieser Person einwirkt.

2. Vorrichtung nach Anspruch 1, **dadurch gekennzeichnet, dass** die Mittel für die Erfassung von Objekten (1) wenigstens einen Objektdetektor (19) umfassen, wobei die Funktion des Objektdetektors auf wenigstens einem der folgenden physikalischen Phänomene basiert: Empfang von elektromagnetischen Wellen, die an gegebenen Materialien reflektiert werden, von magnetischer Strahlung, von sichtbaren oder unsichtbaren Lichtwellen und von Schallwellen sowie chemische Reaktionen.

3. Vorrichtung nach Anspruch 2, **dadurch gekennzeichnet, dass** die Mittel (3), die die Mittel für die Erfassung von Objekten (1) mit einem ersten Teil des Körpers der Person verbinden, durch einen Schuh (10) gebildet sind, der von der Person angezogen werden kann, wobei der Objektdetektor (19) mit dem Schuh (10) fest verbunden ist.

4. Vorrichtung nach Anspruch 3, **dadurch gekennzeichnet, dass** der Objektdetektor (19) mit dem Schuh fest verbunden ist, indem er in die Sohle (11) des Schuhs (10) eingebettet ist.

5. Vorrichtung nach Anspruch 2, **dadurch gekennzeichnet, dass** die Mittel (3), die die Mittel für die Erfassung von Objekten (1) mit einem ersten Teil des Körpers der Person verbinden, durch wenigstens ein Armband gebildet sind, das um eine der Gliedmaßen der Person getragen werden kann, wobei der Objektdetektor (19) mit dem Armband fest verbunden ist.

6. Vorrichtung nach einem der Ansprüche 1 bis 5, **dadurch gekennzeichnet, dass** die Mittel (5) zum Umsetzen des Erfassungssignals in ein elektrisches Stimulationssignal, das auf einen zweiten Teil des Körpers der Person einwirkt, durch einen Umsetzer (12) für das am Ausgang (2) der Erfassungsmittel (1) erhaltene Erfassungssignal in ein elektrisches Signal mit gegebenem Wert und durch zwei Elektroden (13, 14), die mit dem Ausgang (15) des Umsetzers (12) verbunden sind, gebildet sind, wobei diese zwei Elektroden (13, 14) auf den zweiten Teil (6) des Körpers der Person aufgebracht werden können.

7. Vorrichtung nach Anspruch 6, **dadurch gekennzeichnet, dass** wenigstens eine der zwei Elektroden aus einer selbstklebenden Pastille (16) und aus einem elektrischen Leitungspunkt (17), der sich im Wesentlichen in der Mitte der Pastille befindet, gebildet ist, wobei der elektrische Leitungspunkt mit der Haut des Körpers in Kontakt gelangen kann, wenn die Pastille auf die Haut geklebt ist.

8. Vorrichtung nach einem der Ansprüche 6 und 7, **dadurch gekennzeichnet, dass** der Umsetzer (12) so beschaffen ist, dass er an seinem Ausgang (15) elektrische Impulse liefert, deren Dauer kleiner als etwa 0,75 ms ist, die mit einer Frequenz moduliert sind, die im Bereich von 1 bis 100 Hz liegt, und die eine Stärke besitzen, die im Bereich von etwa 0,5 bis etwa 100 mA liegt.

9. Vorrichtung nach Anspruch 1, **dadurch gekennzeichnet, dass** die Mittel für die Erfassung von Objekten (1) wenigstens zwei Objektdetektoren (31, 32) umfassen, wobei die Funktion dieser Objektdetektoren auf wenigstens einem der folgenden physikalischen Phänomene basiert: Empfang von elektromagnetischen Wellen, die an gegebenen Materialien reflektiert werden, von magnetischen Strahlungen, von sichtbaren oder unsichtbaren Lichtwellen und von Schallwellen.

10. Vorrichtung nach Anspruch 9, **dadurch gekennzeichnet, dass** die Mittel (3) zum Verbinden der Mittel für die Erfassung von Objekten (1) mit einem ersten Teil (4) des Körpers der Person zwei Schuhe (10) umfassen, die an den beiden Füßen der Person getragen werden können, wobei jeder der zwei Objektdetektoren (31, 32) mit jeweils einem dieser beiden Schuhe (10) fest verbunden ist.

11. Vorrichtung nach Anspruch 10, **dadurch gekennzeichnet, dass** jeder der zwei Objektdetektoren (31, 32) mit jeweils einem dieser beiden Schuhe (10) **dadurch** fest verbunden sind, dass er in deren Sohle (11) eingebettet ist.

12. Vorrichtung nach einem der Ansprüche 10 und 11, **dadurch gekennzeichnet, dass** sie außerdem Mittel (30), um die Bewegung der zwei Füße der Person in Bezug auf den Boden zu erfassen, und Mittel, um die zwei Objektdetektoren (31, 32) in Abhängigkeit von der Bewegung der Füße zu steuern, umfasst und dass die zwei Objektdetektoren (31, 32) gebildet sind durch zwei Bewegungsaufnehmer (35, 36), die so angebracht sind, dass sie mit jeweils einem der beiden Schuhe zusammenwirken, wobei jeder Aufnehmer an seinem Ausgang (37, 38) Signale liefern kann, die die Bewegung des Fußes, der den Schuh trägt, mit dem er zusammenwirkt, repräsentieren, und durch ein Steuerorgan (39), das die Ausgänge (37, 38) der zwei Aufnehmer (35, 36) jeweils mit einem Steuereingang (44, 45) der zwei Objektdetektoren (31, 32) verbindet.

13. Vorrichtung nach Anspruch 12, **dadurch gekennzeichnet, dass** das Steuerorgan (39) so beschaffen ist, dass es die am Ausgang jedes Bewegungsaufnehmers (35, 36) gelieferten Signale untersucht und Steuersignale an seine beiden Ausgänge (42, 43) liefert, die mit jeweils einem der Steuereingänge (44, 45) der zwei Objektdetektoren (31, 32) verbunden sind, derart, dass während des Gehens der Person auf dem Weg die Steuersignale die Funktion jenes Objektdetektors (31, 32) unterbrechen, der dem Schuh zugeordnet ist, der momentan auf dem Weg aufliegt, und die Funktion jenes Objektdetektors aufrechterhalten, der dem Schuh zugeordnet ist, der momentan angehoben ist.

14. Vorrichtung nach einem der Ansprüche 9 bis 13, **dadurch gekennzeichnet, dass** die Mittel (5) zum Umsetzen des Erfassungssignals in ein elektrisches Stimulationssignal, das auf einen zweiten Teil des Körpers der Person einwirkt, umfassen: eine funktionale elektrische Stimulationsleitung (50), die gebildet ist aus wenigstens einem Signalumsetzer (12) und aus Mitteln zum Anlegen der am Ausgang des Umsetzers gelieferten Signale an den zweiten Teil (6) des Körpers der Person, wobei der Eingang (57) des Umsetzers den Eingang der funktionalen elektrischen Stimulationsleitung bildet, einen Wechselschalter (53), der durch einen Steuereingang (54) steuerbar ist, wobei die Versorgungseingänge (55, 56) des Wechselschalters mit den Ausgängen (51, 52) jeweils eines der zwei Objektdetektoren (31, 32) verbunden sind, wobei der Ausgang (58) dieses Umschalters mit dem Eingang (57) der funktionalen elektrischen Stimulationsleitung verbunden ist, und Mittel (60), um den Wechselschalter (53) durch seinen Steuereingang (54) zu steuern.

15. Vorrichtung nach den Ansprüchen 13 und 14, **dadurch gekennzeichnet, dass** die Mittel (60) zum Steuern des Wechselschalters (53) durch seinen Steuereingang (54) aus zwei Bewegungsaufnehmern (35, 36) und aus einem Steuerorgan (39) gebildet sind, wobei einer (93) der Steuereingänge mit dem Steuereingang (54) des Wechselschalters (53) verbunden ist.

16. Vorrichtung nach einem der Ansprüche 9 bis 13, **dadurch gekennzeichnet, dass** die Mittel (5) zum Umsetzen des Erfassungssignals in ein elektrisches Stimulationssignal, das auf einen zweiten Teil des Körpers der Person einwirkt, zwei funktionale elektrische Stimulationsleitungen (33, 34) umfassen, die jeweils aus einem Signalumsetzer (12) und aus Mitteln zum Anlegen der am Ausgang des Umsetzers gelieferten Signale an den zweiten Teil (6) des Körpers der Person gebildet sind, wobei der Eingang (67, 68) des Umsetzers den Eingang der funktionalen elektrischen Stimulationsleitung bildet und wobei die Eingänge der zwei funktionalen elektrischen Stimulationsleitungen mit jeweils einem der Ausgänge (51, 52) der zwei Objektdetektoren (31, 32) verbunden sind.

## Claims

1. A device for warning a person moving along a given path against the presence, on the path, of objects that might be dangerous for that person, comprising:
detection means (1) for detecting said objects, said detection means being suitable for delivering a detection signal on an output (2), a change of state in said signal being indicative of the presence of said object in a predetermined zone of said path; and
means (3) for connecting the object detection means to a first portion of the body of said person;
the device being **characterized by** the fact that it further comprises means (5) for converting said detection signal into an electrical function-stimulating signal acting on a second portion of the body of said person.

2. A device according to claim 1, **characterized by** the fact that said object detection means (1) comprise at least one object detector (19), the operation of said object detector being based on at least one of the following physical phenomena: receiving electromagnetic waves reflected on given materials; receiving magnetic radiation; receiving visible or invisible light waves; receiving sound waves; chemical reactions.

3. A device according to claim 2, **characterized by** the fact that the means (3) for connecting the object detection means (1) to a first portion of the body of said person are constituted by a boot (10) suitable for being worn by said person, the object detector (19) being secured to the boot (10).

4. A device according to claim 3, **characterized by** the fact that the object detector (19) is secured to the boot by being embedded in the sole (11) of said boot (10).

5. A device according to claim 2, **characterized by** the fact that the means (3) for connecting the object detection means (1) to a first portion of the body of said person are constituted by at least one bracelet suitable for being worn around a limb of said person, the object detector (19) being secured to said bracelet.

6. A device according to any one of claims 1 to 5, **characterized by** the fact that the means (5) for converting the detection signal into an electrical function-stimulating signal acting on a second portion of the body of said person are constituted by a converter (12) for converting the detection signal obtained at the output (2) of the detection means (1) into an electrical signal of given value, and two electrodes (13, 14) which are connected to the output (15) of the converter (12), the two electrodes (13, 14) being adapted to be applied to said second portion (6) of the body of the person.

7. A device according to claim 6, **characterized by** the fact that at least one of the two electrodes is constituted by a sticky patch (16) and an electrical conduction point (17) situated substantially in the center of said patch, said electrical conduction point being suitable for coming into contact with the skin of the body when the patch is stuck to the skin.

8. A device according to claim 6 or claim 7, **characterized by** the fact that the converter (12) is arranged to deliver electrical pulses at its output (15), the pulses being of duration shorter than about 0.75 ms, being modulated at a frequency lying in the range 1 Hz to 100 Hz, and delivering a current lying in the range 0.5 mA to 100 mA.

9. A device according to claim 1, **characterized by** the fact that the object detection means (1) comprise at least two object detectors (31, 32), the operation of said object detectors being based on at least one of the following physical phenomena: receiving electromagnetic waves reflected on given materials, receiving magnetic radiation, receiving visible or invisible light waves, receiving sound waves.

10. A device according to claim 9, **characterized by** the fact that said means (3) for connecting the object detection means (1) to a first portion (4) of the body of said person comprise two boots (10) suitable for being worn respectively on the two feet of said person, said two object detectors (31, 32) being secured to said two boots (10) respectively.

11. A device according to claim 10, **characterized by** the fact that said two object detectors (31, 32) are secured to the two boots (10) respectively by being embedded in their sole (11).

12. A device according to claim 10 or claim 11, **characterized by** the fact that it further comprises means (30) for detecting motion of the two feet of said person relative to the ground, and means for controlling said two object detectors (31, 32) as a function of foot motion, the two object detectors (31, 32) as a function of foot motion being constituted by two motion sensors (35, 36) mounted to cooperate with the two boots, respectively, each sensor being suitable for delivering signals at an output (37, 38) representative of motion of the foot wearing the boot with which it cooperates, and a control member (39) connecting the outputs (37, 38) of the two sensors (35, 36) to respective control inputs (44, 45) of the two object detectors (31, 32).

13. A device according to claim 12, **characterized by** the fact that said control member (39) is arranged to receive the signals delivered at the outputs of the motion sensors (35, 36) and to deliver control signals on two outputs (46, 47) respectively connected to the control inputs (44, 45) of the two object detectors (31, 32), in such a manner that, while the person is walking along the path, said control signals interrupt the operation of the object detector (31, 32) which is associated with the boot that is resting on the path, and keep in operation the object detector which is associated with the boot which is raised.

14. A device according to any one of claims 9 to 13, **characterized by** the fact that the means (5) of converting the detection signal into an electrical function-stimulating signal acting on a second portion of the body of said portion comprise: an electrical function-stimulating line (50) constituted by at least one signal converter (12) and means for applying the signals delivered at the output of the converter to a second portion (6) of the body of the person, the input (57) of the converter constituting the input of the electrical function-stimulating line, a change over switch (53) controllable by means of a control input (54), the feed inputs (55, 56) of said change over switch being connected to respective outputs (51, 52) of the two object detectors (31, 32), the output (58) of said switch being connected to the input (57) of said electrical function-stimulating line (50), and means (60) for controlling said change over switch (53) via its control input (54).

15. A device according to claims 13 and 14, **characterized by** the fact that the means (60) for controlling said change over switch (53) via its control input (54) are constituted by the two motion sensors (35, 36) and by the control member (39) having one of its control outputs (93) connected to the control input (54) of the change over switch (53).

16. A device according to any one of claims 9 to 13, **characterized by** the fact that the means (5) for converting the detection signal into an electrical function-stimulating signal acting on a second portion of the body of said person comprise two electrical function-stimulating lines (33, 34), each constituted by at least one signal converter (12) and means for applying the signals delivered at the output of the converter to a second portion (6) of the body of the person, the input (67, 68) of the converter constituting the input of the electrical function-stimulating line, the inputs of the two electrical function-stimulating lines being respectively connected to the outputs (51, 52) of the two object detectors (31, 32).
